# EUROPEAN PATENT APPLICATION

(11) **EP 4 425 376 A1**
(43) Date of publication of application: **04.09.2024**
(21) Application number: 22894491.4
(22) Date of filing: 30.09.2022
(51) Int. Cl.: G06N 3/04, G06N 3/08

(54) **METHOD AND APPARATUS FOR SEARCHING FOR NEURAL NETWORK ENSEMBLE MODEL, AND ELECTRONIC DEVICE**

(30) Priority: 22.11.2021 CN 202111387843
(71) Applicant: Huawei Technologies Co., Ltd., Shenzhen, Guangdong 518129 (CN)
(72) Inventor: RU, Binxin, Shenzhen, Guangdong 518129 (CN); WAN, Xingchen, Shenzhen, Guangdong 518129 (CN); ESPERANCA, Pedro, Shenzhen, Guangdong 518129 (CN); CARLUCCI, Fabio Maria, Shenzhen, Guangdong 518129 (CN); LI, Zhenguo, Shenzhen, Guangdong 518129 (CN)
(74) Representative: Körber, Martin Hans
(86) International application number: PCT/CN2022/123139
(87) International publication number: WO 2023/087953

(57) **Abstract**

Disclosed is a method for searching for a neural network architecture ensemble model. The method includes: obtaining a dataset, where the dataset includes a sample and an annotation in a classification task; performing search by using a distributional neural network architecture search algorithm, including: determining a hyperparameter of a neural network architecture distribution; sampling a valid (valid) neural network architecture from the architecture distribution defined by the hyperparameter; training and evaluating the neural network architecture on the dataset, to obtain a performance indicator; determining, based on the performance indicator, neural network architecture distributions that share the hyperparameter, to obtain a candidate pool of base learners, where the base learner is a neural network architecture that meets an architecture distribution requirement; and determining a surrogate model, where the surrogate model is used to predict test performance of an unevaluated neural network architecture; and predicting test performance of the base learner in the candidate pool by using the surrogate model, and determining that *k* diverse (diverse) base learners that meet a task scenario requirement form an ensemble model, where a size of the ensemble model is *k*.

## Description

This application claims priority to Chinese Patent Application No. 202111387843.8, filed with the China National Intellectual Property Administration on November 22, 2021 and entitled "METHOD AND APPARATUS FOR SEARCHING FOR NEURAL NETWORK ENSEMBLE MODEL, AND ELECTRONIC DEVICE", which is incorporated herein by reference in its entirety.

### TECHNICAL FIELD

Embodiments of this application relate to the field of machine learning, and in particular, to a method and an apparatus for searching for a neural network ensemble model, and an electronic device.

### BACKGROUND

Deep neural network based models have made significant progress in various tasks such as image recognition, speech recognition, and machine translation. However, a predicted probability (a softmax probability) of a single deep model generally has a large calibration error and a low confidence level. Especially when a test data distribution is inconsistent with a training data distribution (OOD data), a rejection capability of a single deep neural network is weak and an accurate uncertainty (uncertainty) cannot be reflected. As a result, the deep neural network is prone to overconfidence in incorrect prediction performance. These problems greatly limit reliability and robustness of the deep neural network during high-risk practical application, high-uncertainty practical application, or practical application involving the OOD data.

For a multi-classification problem, the OOD data means that a data distribution of a test sample is different from that of a training sample. The difference may be caused by different data generation environments, or damage or disturbance to the sample. Autonomous driving is used as an example. If training data is collected on sunny days and test data is collected on rainy and snowy days, or training data is collected from suburban areas and test data is collected from cities, the test data is OOD (out-of-distribution) compared with the training data. For such data, a machine learning model needs to have a rejection capability.

A base learner (base learner) is a single model in an ensemble model combination.

An ensemble model (ensemble model) combines predictions of a plurality of base learners for a final prediction to form a better model/prediction. The ensemble model can achieve higher test precision, have a better calibrated predicted probability, and present a more accurate quantitative uncertainty and higher robustness especially for OOD data. For the deep neural network based model, the ensemble model also has these advantages.

For example, a deep ensemble model (deep ensembles) combines a plurality of neural networks that have a same network architecture but different initial training weight values (initialization), and averages final predicted outputs (output logits), so that test precision and model calibration (model calibration) precision can be effectively improved.

Model calibration is to ensure consistency between a predicted probability of the model for an event result and an actual empirical probability of an event. For example, in a binary classification task, if 100 images whose probability predicted by the model is 0.7 are extracted and actual labels of 70 images are 1, it indicates that a probability predicted by the model is consistent with an actual empirical probability. In other words, the prediction of the model is very accurate and reliable. During actual application, especially high-risk application, a predicted probability of the machine learning model is usually used for determining or decision making of a user. Therefore, a predicted confidence level of the machine learning model is very important.

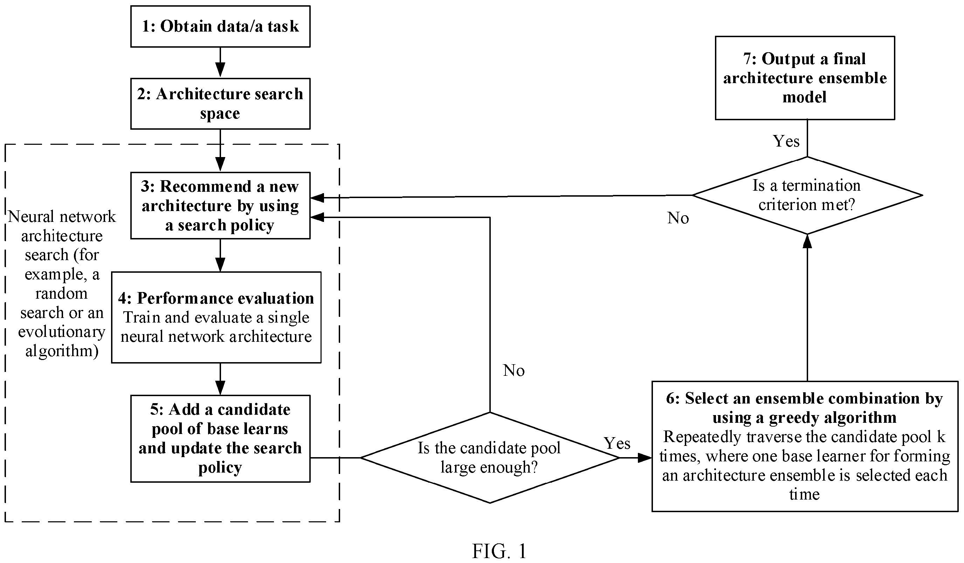

Representation/performance of the ensemble model often depends on diversity of base learners in a combination of the ensemble model. A larger difference between base models often indicates a better ensemble effect. Therefore, in many ensemble methods, diversity of base learners attempts to be increased. As shown in FIG. 1, a deep ensemble model changes an initial training weight of a base learner to increase diversity; and a hyperparameter ensemble model (hyper-deep ensemble) changes a hyperparameter for training on a basis of changing the initial weight, to further increase the diversity. However, base learners of these deep ensemble models share a same neural network architecture. Therefore, neural networks of different architectures are used to form an ensemble model (architecture ensemble), so as to naturally increase the diversity.

The ensemble model is formed by base learners of a plurality of deep neural networks with different network architectures.

However, a search for an ensemble model formed by different network architectures is much more complex than a search for a single neural network architecture (neural architecture search, NAS), because during the ensemble model search, not only a network architecture of a base learner with better performance needs to be searched for, but also performance of a possible combination of different base learners needs to be explored. Therefore, in an existing method, a large quantity of neural network architectures need to be completely evaluated to generate a candidate pool of base learners, and test performance of ensemble models generated by different combinations needs to be evaluated by using a greedy algorithm. As a result, a search for the ensemble model is computationally expensive and time-consuming.

### SUMMARY

To resolve the foregoing problem, embodiments of this application provide a method and an apparatus for searching for a neural network ensemble model, and a terminal device.

According to a first aspect, an embodiment of this application provides a method for searching for a neural network architecture ensemble model. The method includes: obtaining a dataset, where the dataset includes a sample and an annotation in a classification task; performing search by using a distributional neural network architecture search algorithm, including: determining a hyperparameter of a neural network architecture distribution; sampling a neural network architecture from the architecture distribution defined by the hyperparameter; training and evaluating the neural network architecture based on the sample and the annotation in the classification task, to obtain a performance indicator; determining, based on the performance indicator, neural network architecture distributions that share the hyperparameter, to obtain a candidate pool of base learners, where the base learner is a neural network architecture that meets an architecture distribution requirement, and the neural network architecture is formed by repeatedly stacking neural network architecture cells; and determining a surrogate model, where the surrogate model is used to predict test performance of an unevaluated neural network architecture; and predicting test performance of the base learner in the candidate pool by using the surrogate model, and determining that *k* base learners that meet a requirement of the classification task form an ensemble model, where a size of the ensemble model is *k*. In this way, a quantity of times that a single neural network architecture and a single ensemble model are evaluated is greatly reduced, thereby significantly reducing difficulty and costs of the structure ensemble model without lowering search quality. Compared with a single deep neural network based model, the ensemble model is better at rejecting OOD data, and therefore is more robust for a data distribution shift (distribution shift).

In a feasible implementation, the performing search by using a distributional neural network architecture search algorithm includes: performing distributional neural network architecture search by using an approximate neural network architecture search via operation distribution (approximate neural architecture search via operation distribution, ANASOD) algorithm. In this way, a larger part in a search space can be traversed, thereby greatly improving search efficiency.

In a feasible implementation, the determining a hyperparameter of a neural network architecture distribution includes: determining that the hyperparameter of the neural network architecture distribution is an ANASOD encoding, where the ANASOD encoding is a vector indicating probability distributions of operators in the neural network architecture cell, and there is a one-to-many mapping between an ANASOD encoding and a neural network architecture cell. In this way, the search space can be greatly compressed through approximation of a NAS problem based on an operator probability distribution.

In a feasible implementation, the determining a hyperparameter of a neural network architecture distribution includes: optimizing the hyperparameter of the neural network architecture distribution by using a search policy, where the search policy is Bayesian optimization, and the search policy is used to sample, in a next iteration, a neural network cell whose performance indicator better meets a requirement than that of a current neural network architecture cell. In this way, an architecture distribution defined by the hyperparameter is selected and evaluated each time. Therefore, a larger part in the search space can be traversed, thereby greatly improving search efficiency.

In a feasible implementation, the sampling a neural network architecture from the architecture distribution defined by the hyperparameter includes: determining a specific quantity of operators in constituent cells of the neural network architecture based on an operator probability distribution defined by the ANASOD encoding; and connecting different operators based on a specified search space to obtain the neural network architecture. In this way, a valid architecture that conforms to a definition of the hyperparameter can be obtained as a performance surrogate for all neural network architecture distributions that share the ANASOD encoding *θ*.

In a feasible implementation, the training and evaluating the neural network architecture cell based on the dataset, to obtain a performance indicator includes: training the neural network architecture based on a training dataset; and evaluating the neural network architecture on a validation dataset, to obtain the performance indicator, where both training set data and validation set data belong to the dataset. In this way, only one neural network architecture may be sampled and evaluated from each architecture distribution, and a performance indicator y of the neural network architecture is used as a performance indicator of all neural network architecture cells that share the ANASOD encoding *θ*, so that high costs caused by repeatedly evaluating performance of similar architecture cells can be effectively avoided.

In a feasible implementation, the performing search by using a distributional neural network architecture search (distributional NAS) algorithm further includes: determining the search policy for the neural network architecture distribution based on the performance indicator and the hyperparameter. In this way, the search policy is adjusted, to determine a search policy for a distributional neural network architecture search in a next iteration, and a neural network cell whose performance indicator better meets a requirement than that of a current neural network architecture cell is sampled in the next iteration.

In a feasible implementation, the performing search by using a distributional neural network architecture search (distributional NAS) algorithm further includes: determining a predicted performance value of a hyperparameter of another unknown distribution, including a mean value and a variance, based on a hyperparameter and a performance indicator of each found neural network architecture distribution; and determining a performance prediction policy for the neural network architecture distribution based on the mean value and the variance, where the performance prediction policy is used to predict the performance indicator of the neural network architecture distribution. In this way, the performance prediction policy (*θ*_t, y_t) may be updated based on the predicted performance value, to determine a next search policy.

In a feasible implementation, the determining, based on the performance indicator, neural network architecture distributions that share the hyperparameter, to obtain a candidate pool of base learners includes: determining a search policy for the neural network architecture distribution based on the performance indicator and the hyperparameter; determining a performance prediction policy for the neural network architecture distribution based on the performance indicator and the neural network architecture cell; and searching, according to the search policy and the performance prediction policy, the neural network architecture distributions that share the hyperparameter, to determine the candidate pool of the base learners. In this way, an optimal neural network architecture distribution can be obtained. Based on a high-quality architecture distribution, a high-quality neural network architecture with similar performance can be generated, to provide a good candidate pool of base learners.

In a feasible implementation, the determining, based on the performance indicator, neural network architecture distributions that share the hyperparameter, to obtain a candidate pool of base learners includes: outputting, based on a plurality of neural network architectures in a historical search and corresponding performance indicators, a plurality of neural network architectures that share the hyperparameter; determining, based on the plurality of neural network architectures that share the hyperparameter, a neural network architecture distribution that meets a requirement; and generating a plurality of neural network architecture cells based on the neural network architecture distribution that meets the requirement, to obtain a generation distribution/the candidate pool of the base learners. In this way, the candidate pool/architecture distribution is learned by using the distributional neural network architecture search method. This is more efficient, and greatly reduces a quantity of times and costs of evaluating a single network architecture.

In a feasible implementation, the determining a surrogate model includes: obtaining the surrogate model through training on the dataset based on the neural network architecture cells and the performance indicator. In this way, the surrogate model can be used to directly predict performance of another unevaluated architecture, to avoid huge evaluation costs.

In a feasible implementation, the predicting test performance of the base learner in the candidate pool by using the surrogate model, and determining that *k* base learners that meet a task scenario requirement form an ensemble model includes: predicting test performance of a plurality of base learners in the candidate pool by using the surrogate model; performing local search (local search) based on a prediction result, and determining q estimated vertex architectures, where the estimated vertex architecture is a neural network architecture whose performance indicator predicted by the surrogate model on a validation set is higher than that of an adjacent architecture; and combining k architectures whose performance indicators meet the requirement in the q estimated vertex architectures, to obtain the ensemble model. In this way, an optimal combination can be selected from the candidate pool, difficulty of an extremely complex permutation and combination problem is reduced, and a high-quality ensemble model can be found by evaluating only a few combinations of base learners.

In a feasible implementation, the combining k architectures whose performance indicators meet the requirement in the q estimated vertex architectures includes: sorting performance indicators of the q estimated vertex architectures in descending order, and combining k architectures whose performance indicators rank top. In this way, an optimal combination can be selected from the candidate pool, difficulty of an extremely complex permutation and combination problem is reduced, and a high-quality ensemble model can be found by evaluating only a few combinations of base learners.

In a feasible implementation, the combining k architectures whose performance indicators meet the requirement in the q estimated vertex architectures includes: traversing the q estimated vertex architectures by using a greedy algorithm (greedy selection algorithm), and selecting and adding k architectures to the ensemble model accordingly. In this way, an optimal combination can be selected from the candidate pool, a possibility and complexity of permutation and combination are greatly reduced (selection of k base learners from all base learners in the candidate pool is reduced to selection of k base learners from q base learners), and a high-quality ensemble model can be found by evaluating only a few combinations of base learners.

According to a second aspect, an embodiment of this application provides an apparatus for searching for a neural network architecture ensemble model. The apparatus includes: a data obtaining module, configured to obtain a dataset, where the dataset includes a sample and an annotation in a classification task; an architecture distribution search module, configured to perform search by using a distributional neural network architecture search algorithm, including: determining a hyperparameter of a neural network architecture distribution; sampling a neural network architecture from the architecture distribution defined by the hyperparameter; training and evaluating the neural network architecture based on the sample and the annotation in the classification task, to obtain a performance indicator; determining, based on the performance indicator, neural network architecture distributions that share the hyperparameter, to obtain a candidate pool of base learners, where the base learner is a neural network architecture that meets an architecture distribution requirement, and the neural network architecture is formed by repeatedly stacking neural network architecture cells; and determining a surrogate model, where the surrogate model is used to predict test performance of an unevaluated neural network architecture; and an architecture ensemble model combination module, configured to predict test performance of the base learner in the candidate pool by using the surrogate model, and determine that *k* base learners that meet a requirement of the classification task form an ensemble model, where a size of the ensemble model is *k*.

According to a third aspect, an embodiment of this application provides an electronic apparatus, including a processor and a memory. The processor is configured to execute computer executable instructions stored in the memory, and the processor runs the computer executable instructions to perform the method for searching for a neural network structure based on evolutionary learning in any embodiment of the first aspect.

According to a fourth aspect, an embodiment of this application provides a storage medium, including a readable storage medium and a computer program stored in the readable storage medium. The computer program is configured to implement the method for searching for a neural network structure based on evolutionary learning in any embodiment of the first aspect.

### BRIEF DESCRIPTION OF DRAWINGS

To describe the technical solutions in a plurality of embodiments disclosed in this specification more clearly, the following briefly describes the accompanying drawings for describing the embodiments. It is clear that the accompanying drawings in the following descriptions show merely the plurality of embodiments disclosed in this specification, and a person of ordinary skill in the art may still derive other drawings from these accompanying drawings without creative efforts.

The following briefly describes the accompanying drawings that need to be used in the descriptions of embodiments or the conventional technology.
FIG. 1 is a flowchart of a method for searching for an ensemble model in a first solution;
FIG. 2 is a diagram of a system architecture according to an embodiment of this application;
FIG. 3 is a schematic diagram of applying a method for searching for a neural network ensemble model to an image classification scenario according to an embodiment of this application;
FIG. 4 is a schematic diagram of applying a method for searching for a neural network ensemble model to an object detection and recognition scenario according to an embodiment of this application;
FIG. 5 is a flowchart block diagram of searching for a neural network ensemble model according to an embodiment of this application;
FIG. 6 is a diagram of comparison curves of test errors obtained on CIFAR10 by using various benchmarks including DistriNAS-PM according to this application;
FIG. 7 is a schematic diagram of 15 types of interference/noise that are randomly selected and added to images in CIFAR10 and CIFAR100 validation sets;
FIG. 8 is a diagram of an effect that is after interference/noise is randomly selected and added to images in CIFAR10 and CIFAR100 validation sets;
FIG. 9 is a schematic diagram of OOD validation comparison between DistriNAS-PM provided in this application and another search method in a NAS-Bench-201 space; and
FIG. 10 is a schematic diagram of an electronic device.

### DESCRIPTION OF EMBODIMENTS

In the following descriptions, "some embodiments" involved describe a subset of all possible embodiments. However, it may be understood that, "some embodiments" may be same subsets or different subsets of all possible embodiments, and may be combined with each other without a conflict.

In the following descriptions, involved terms, such as "first\second\third" or module A, module B, and module C, are merely used to distinguish between similar objects, and do not represent a specific order of objects. It may be understood that, specific orders or priorities may be interchanged if allowed, so that embodiments of this application described herein may be implemented in an order other than those shown or described herein.

In the following descriptions, involved reference numerals such as S 110 and S 120 that indicate steps do not necessarily indicate that the steps are to be performed based on the order, and consecutive steps may be transposed if allowed, or may be performed at the same time.

Unless otherwise defined, all technical and scientific terms used in this specification have same meanings as those usually understood by a person skilled in the art of this application. In addition, the terms used in this specification are merely for the purpose of describing embodiments of this application, but are not intended to limit this application.

The following describes technical solutions related to embodiments in this application with reference to the accompanying drawings.

A first solution is shown in FIG. 1. A random search (random search, NES-RS) or an evolutionary algorithm (evolutionary algorithm, NES-RE) is used to search for an architecture suitable for serving as a base learner, to establish a large enough candidate pool of base learners. Then, a greedy algorithm (greedy selection algorithm, GSA) is used to traverse the base learners in the candidate pool, and select members for forming a final set one by one.

In the random search algorithm, *nₚₒₒₗ* architecture cells are randomly sampled in a NAS search space by using an objective function and a size *nₚₒₒₗ* of the candidate pool of the base learners as an input, complete training and performance evaluation are performed on each architecture cell to obtain an indicator of the architecture cell, and an output is a candidate pool of base learners.

In the evolutionary algorithm, *nᵢₙᵢₜ* architecture cells are randomly sampled in a NAS search space by using an objective function and a size *nₚₒₒₗ* of the candidate pool of the base learners as an input, and complete training and performance evaluation are performed on each architecture cell to obtain an indicator of the architecture cell. *nₚₐᵣₑₙₜ* architecture cells with best performance indicators are used as parent cells. The following is iteratively performed before a termination criterion is met: B architecture cells are randomly sampled from the parent cells; random mutation is performed on the B architecture cells to obtain B child architecture cells; complete training and performance evaluation are performed on the B child architecture cells; the B child architecture cells are traversed to select an architecture cell that can form an ensemble model with a maximum optimization objective function; the architecture cell is added to a parent architecture cell pool; and an oldest parent architecture cell is removed to ensure that a size of the parent architecture cell pool remains unchanged and is still *nₚₐᵣₑₙₜ.* An output is a candidate pool of base learners.

In the greedy algorithm, the candidate pool of the base learners and an architecture ensemble size k are used as an input; an architecture ensemble is initialized, and is set as a neural network architecture with a lowest test error in the candidate pool; and the architecture is removed from the candidate pool. The following is iteratively performed before the architecture ensemble size is less than k: Remaining base learners in the candidate pool are traversed and added to an existing architecture ensemble one by one to evaluate performance of a new architecture ensemble; and an architecture that can result in maximum performance improvement is selected and added to the existing architecture ensemble, and removed from the candidate pool. An output is a final ensemble model.

In this method, based on a conventional NAS concept, each neural network architecture in an architecture search space is considered as a single individual. Therefore, each neural network architecture/base learner selected and added to the candidate pool needs to be completely trained and evaluated. However, an architecture search in this method generally requires a candidate pool including hundreds of neural network architectures. As a result, extremely high evaluation costs are required for establishing the candidate pool.

When an optimal base learner combination/architecture ensemble is found from the candidate pool, although the used greedy algorithm can greatly simplify an extremely complex permutation and combination problem, a large quantity of possible architecture combinations/architecture ensembles still need to be evaluated. As a result, evaluation costs are greatly improved during ensemble selection.

Therefore, such a search method requires long graphics processing unit (graphics processing unit, GPU) time and high computing power costs to find a high-quality ensemble model. High requirements on GPU time and hardware resources usually limit application of the method in an actual scenario.

GPU time (GPU time) is a common unit for measuring a calculation amount of an algorithm, is time required for running a single GPU to complete a task, and is specifically expressed as GPU-days (GPU-days), GPU-seconds (GPU-seconds), or the like.

The existing method for automatically searching for an ensemble model has high search costs and low search efficiency. A root cause is that a large enough candidate pool of base learners needs to be first established, and then a plurality of combinations of base learners in the candidate pool are attempted to find an optimal ensemble model in the method. However, to establish a large enough candidate pool of base learners, a large quantity of neural network architectures need to be completely trained and evaluated. In a conventional NAS method, a single neural network architecture is used as a search object, and many extremely similar neural network architectures also need to be separately trained and evaluated. To find an optimal ensemble model from a plurality of combinations of base learners in the candidate pool, a large quantity of possible architecture combinations need to be evaluated. Although the greedy algorithm can greatly simplify an NP-hardness permutation and combination problem, a quantity of combinations to be evaluated is still in direct proportion to a quantity of base learners in the candidate pool and a scale of the ensemble model.

The following describes the technical solutions in embodiments of this application with reference to the accompanying drawings in embodiments of this application.

In an existing neural network architecture search space, an ensemble model has the following characteristics: Performance of the ensemble model depends on average performance of base learners in the ensemble; on the premise of ensuring excellent average performance, a larger difference between base learners, that is, higher ensemble diversity, indicates better performance of the ensemble model; and a larger predicted output difference between vertex architectures in the neural network architecture search space indicates higher diversity of an ensemble model formed by the vertex architectures. The vertex architecture refers to an architecture whose test precision is higher than that of another architecture directly adjacent to the vertex architecture.

Based on the characteristics of the foregoing ensemble model, in a method for searching for a neural network ensemble model provided in an embodiment of this application, distributional neural network architecture search (distributional NAS) is performed to determine to generate an architecture distribution or a candidate pool of base learners. Based on the generated architecture distribution or candidate pool of base learners, optimal neural network vertex architectures in the candidate pool are predicted by using a surrogate model (surrogate model), and these vertex architectures are combined to obtain an ensemble model.

It should be understood that in the neural network architecture distribution search, neural networks that have similar architectures or that belong to a same distribution are integrated for an evaluation, to avoid repeatedly evaluating a single neural network architecture for a plurality of times, and greatly improve search efficiency. In addition, base learners generated from a finally found architecture distribution all have close and excellent average performance, to meet a requirement that performance of an ensemble model depends on average performance of base learners in the ensemble model.

In the method for searching for a neural network ensemble model provided in embodiments of this application, a more efficient solution for generating a candidate pool of base learners and a more efficient base learner combination solution are used, so that ensemble model search costs can be reduced, and ensemble model search efficiency is greatly improved on the premise of ensuring performance, and ensemble model search costs in a larger search space are controllable and acceptable. The method is applicable to more actual production scenarios.

The surrogate model is generally a simple model, is used to simulate an excessively complex actual problem or a black-box problem, and may also be used to fast predict an output of the black-box problem or the excessively complex problem. The surrogate model can be used to fast and accurately predict test performance of a neural network architecture, to avoid a large amount of training and a large quantity of evaluations to obtain real performance of the neural network architecture. Based on that a larger predicted output difference between vertex architectures in a neural network architecture search space indicates higher diversity of an ensemble model formed by the vertex architectures, these vertex architectures are combined to ensure diversity of the ensemble model, and avoid evaluation costs of an ensemble model generated by attempting different architecture combinations for a plurality of times.

Because performance of the ensemble model mainly depends on average performance and diversity of base learners of the ensemble model, according to the method for searching for a neural network ensemble model provided in embodiments of this application, a quantity of evaluations is reduced, and the foregoing characteristics of the ensemble model are specifically ensured, so that a user can efficiently find a high-performance ensemble model.

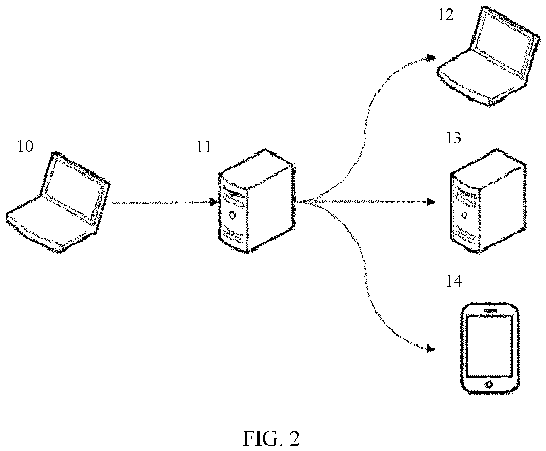

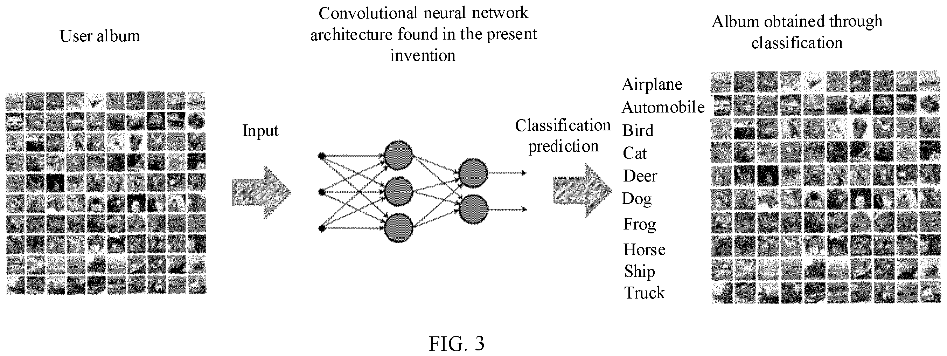

FIG. 2 is a diagram of a system architecture according to an embodiment of this application. The method for searching for a neural network ensemble model provided in embodiments of this application may be widely applied to various system architectures and scenarios in which a convolutional neural network needs to be used. As shown in FIG. 3, a data collection device 10 obtains required data or samples in various manners, and provides the data for a computing device 11. The method for searching for a neural network ensemble model provided in embodiments of this application is run on the computing device 11, to search for a neural network architecture, train a finally found architecture, and deploy a trained ensemble model on devices in various application scenarios, such as a personal computer 12, a server 13, and a mobile device 14.

FIG. 3 is a schematic diagram of applying the method for searching for a neural network ensemble model to an image classification scenario according to an embodiment of this application. As shown in FIG. 3, a user often stores a large quantity of images in a user album of a smartphone or another multimedia storage device. The images are classified based on information in the images, to help the user manage and search for the images. According to the method for searching for a neural network ensemble model provided in embodiments of this application, a most suitable convolutional neural network ensemble model can be fast searched for and trained in advance in a task for classifying similar images, and deployed on a smartphone, to replace a common network model manually designed by a human expert, so as to achieve higher classification accuracy and improve user experience.

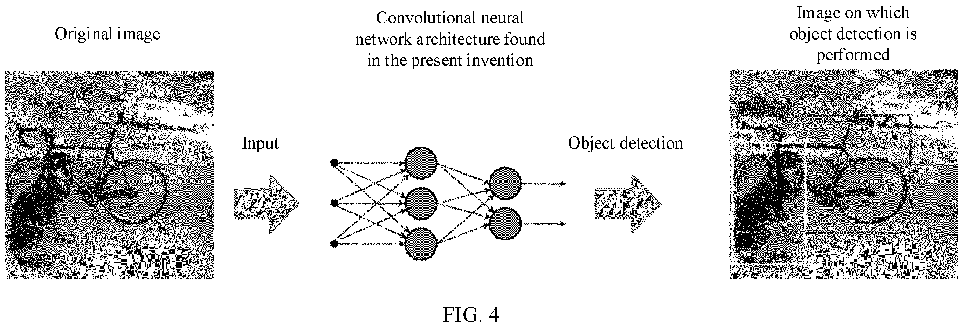

FIG. 4 is a schematic diagram of applying the method for searching for a neural network ensemble model to an object detection and recognition scenario according to an embodiment of this application. As shown in FIG. 4, an ensemble model found by using the method for searching for a neural network ensemble model provided in embodiments of this application may be used to recognize an object in an original image, and output a marked image on which object detection is performed. Object detection and recognition in images or videos are widely applied to tasks such as smart cities and autonomous driving. Similar to the application scenario in FIG. 3, according to the method for searching for a neural network ensemble model provided in embodiments of this application, a most suitable neural network backbone (neural network backbone) may be found in object detection and recognition tasks in various scenarios for various objects and limitations, for example, a hardware limitation of a mobile device, and deployed on a related device to improve recognition precision.

The method for searching for a neural network ensemble model provided in embodiments of this application is further applicable to an image classification scenario in medical imaging. Machine learning systems are currently used in medical imaging to help medical personnel make a diagnosis based on imaging data. Through training of existing data, a convolutional neural network ensemble model found by using the method for searching for a neural network ensemble model provided in embodiments of this application can not only efficiently and precisely perform classification and make a diagnosis based on a feature of an image, but also can output a confidence level of the diagnosis made by the ensemble model because the ensemble model can well calibrate a prediction uncertainty, to help a doctor filter a case that needs to be manually confirmed.

The method for searching for a neural network ensemble model provided in embodiments of this application may be deployed on a computing node of a related device. Data and code of the method may be stored in various common memories in various computers. For execution of instructions and functional modules, steps other than a performance evaluation may generally be performed by a central processing unit (central processing unit, CPU). A performance evaluation is related to training of a neural network architecture, and is generally performed by a graphics processing unit (graphics processing unit, GPU). An ensemble model obtained by using the method for searching for a neural network ensemble model provided in embodiments of this application may be deployed on various computers and mobile computing devices after training, and is applied to various tasks that require convolutional neural network prediction, such as image classification, object detection and recognition, and image classification in medical imaging.

An embodiment of this application provides a method for searching for a neural network ensemble model. The method includes: obtaining a dataset, where the dataset includes a sample and an annotation in a classification task; performing search by using a distributional neural network architecture search (distributional NAS) algorithm, including: determining a hyperparameter of a neural network architecture distribution; sampling a neural network architecture from the architecture distribution defined by the hyperparameter; training and evaluating the neural network architecture based on the sample and the annotation in the classification task, to obtain a performance indicator; determining, based on the performance indicator, neural network architecture distributions that share the hyperparameter, to obtain a candidate pool of base learners, where the base learner is a neural network architecture that meets an architecture distribution requirement, and the neural network architecture is formed by repeatedly stacking neural network architecture cells; and determining a surrogate model (surrogate model), where the surrogate model is used to predict test performance of an unevaluated neural network architecture; and predicting test performance of the base learner in the candidate pool by using the surrogate model, and determining that *k* base learners that meet a scenario requirement of the classification task form an ensemble model, where a size of the ensemble model is *k*.

Evaluations in two aspects are involved in embodiments of this application: (1) An evaluation of a single neural network architecture, that is, a base learner, includes training the neural network architecture from the beginning on a training dataset, and after the training ends, evaluating performance such as test precision of the neural network architecture on a validation dataset. (2) An evaluation of a single ensemble model includes evaluating performance of the entire ensemble model on the validation dataset. A quantity of evaluations (number of evaluations) is a common indicator for measuring calculation costs of an algorithm.

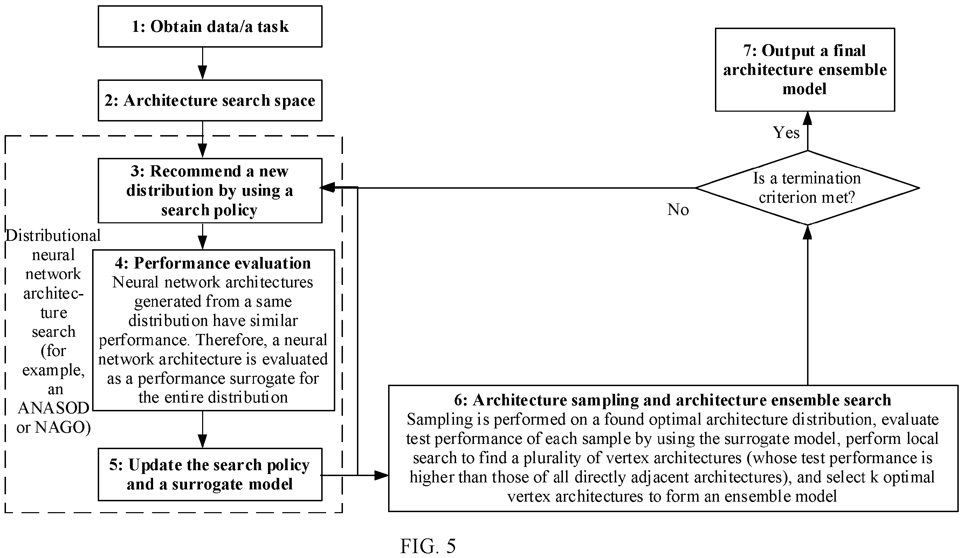

FIG. 5 is a flowchart block diagram of a method for searching for a neural network ensemble model according to an embodiment of this application. With reference to FIG. 5, the following describes in detail each step in the method for searching for a neural network ensemble model provided in this embodiment of this application. As shown in FIG. 5, this embodiment of this application provides the method for searching for a neural network ensemble model. The following steps 1 to 5 are performed to perform distributional neural network architecture search, to obtain a candidate pool of base learners.

Step 1: Obtain a dataset.

In an implementable implementation, existing data and data corresponding to an objective task are obtained.

For example, a specific quantity of images in an image classification task and correct annotations of the images may be obtained from an existing dataset or other manually annotated data as samples (ground truth). The data may be used as training dataset and/or test set data.

Step 2: Determine an architecture search space.

In an implementable implementation, a form of an alternative neural network architecture and a search objective of the neural network architecture are determined by defining a search space and an objective function.

A common search space is defined based on a neural network architecture cell (neural architecture cell), including defining a quantity of operators in a neural network architecture cell, a type of an available operator, a maximum quantity of connections between the operators, and a quantity of times that neural network architecture cells in a final neural network architecture are stacked.

For example, one NAS search space may be defined as follows: A quantity of operators in one neural network architecture cell *a* is 10, there are three types of available operators: A, B, and C, a maximum quantity of connections between the operators is i, and a quantity of times that neural network architecture cells are stacked is j.

The objective function is defined based on an objective task. A common objective function is task precision maximization. For example, accuracy on a validation set in an image classification problem may be defined as the objective function. The objective function may also include other limitations and objects. For example, the objective function is defined to minimize a quantity of floating-point operations per second (floating-point operations per second, FLOPs) of a neural network on the premise of maximizing image classification accuracy, so as to be applied to a mobile device with limited computing power.

According to the method for searching for a neural network ensemble model provided in this embodiment of this application, a distributional neural network architecture search (distributional NAS) algorithm is used for a search, and the architecture search space is determined as a distributional neural network architecture search (distributional NAS) search space. For the distributional neural network architecture search-search space, a hyperparameter of an architecture distribution is defined when the NAS search space is defined, to determine a distribution probability of each operator in a neural network architecture cell.

In an implementable implementation, in the distributional neural network architecture search (distributional NAS) algorithm, neural network architecture distribution search may be performed by using an approximate neural network architecture search via operation distribution (approximate neural architecture search via operation distribution, ANASOD) algorithm. When the NAS search space is defined, a corresponding ANASOD encoding *θ* is defined as the hyperparameter of the architecture distribution.

In an implementable implementation, an ANASOD search space may be defined as follows: An encoding *θ* corresponding to each neural network architecture cell *a* is a vector located in a *k*-dimensional simplex space (simplex space), and each value in the vector is a probability that each operator appears in the neural network architecture cell *a*.

For example, a conventional neural network architecture cell has 10 operators, and there are three types of available operators: A, B, and C. A appears five times in the neural network architecture cell, B appears two times in the neural network architecture cell, and C appears three times in the neural network architecture cell. In this case, an encoding *θ* corresponding to the neural network architecture cell is [0.5, 0.3, 0.2].

There is a one-to-many mapping between an encoding *θ* and a neural network architecture cell, and a plurality of similar neural network architecture cells share a same encoding *θ*, to greatly compress a search space. For example, the following neural network architecture cells share a same encoding *θ*:
a neural network architecture cell 1: A-A-A-A-A-B-B-B-C-C;
a neural network architecture cell 2: A-A-A-A-B-A-B-B-C-C; and
a neural network architecture cell 3: A-A-A-B-B-A-A-B-C-C.

The foregoing three neural network architecture cells are merely some of a plurality of similar neural network architecture cells that share the encoding *θ* =[0.5, 0.3, 0.2], and other similar neural network architecture cells obtained through permutation and combination are not listed one by one.

Similarly, in the NAS search space, test precision performance of different neural network architecture cells that have a same ANASOD encoding *θ* on a test set is usually very similar, indicating that approximation of a NAS problem based only on the operator distribution probability is accurate.

It may be understood that, it can be learned by analyzing the existing NAS search space that it is unnecessary to search for an accurate solution in which an operator type and quantity and a topology structure are completely determined. On the contrary, a group of neural network architecture cells that have a same operator type and quantity, a same operator probability distribution, but different topology structures have very similar performance.

Based on this, the ANASOD encoding *θ* is defined as a vector of distribution probabilities of operators in the neural network architecture cell, and a sum of probability distributions of the operators in the neural network architecture cell is 1.

Different from a large original search space obtained through permutation and combination in a NAS, the ANASOD encoding *θ* is located in a smaller vector space that is easier to be optimized. Based on this, a series of ANASOD algorithms that approximate the NAS algorithm may be used in the search space corresponding to the encoding *θ*, so that search difficulty is greatly reduced and search efficiency is improved while search precision is basically not affected. Because one low-dimensional encoding *θ* may correspond to a group of a plurality of similar neural network architecture cells, the ANASOD algorithm may be used to directly search for the plurality of similar neural network architecture cells and apply the plurality of similar neural network architecture cells to the ensemble model.

The method for searching for a neural network architecture ensemble model provided in this embodiment of this application may alternatively use another distributional neural network architecture search method.

Step 3: Recommend a hyperparameter of a new neural network architecture distribution by using a search policy, to determine the hyperparameter of the neural network architecture distribution.

In an implementable implementation, the search policy may be Bayesian optimization, and the Bayesian optimization is used to recommend the hyperparameter of the new architecture distribution. For example, the Bayesian optimization may be used to recommend a new ANASOD encoding *θ*, or an evolutionary algorithm may be used to recommend the hyperparameter of the new neural network architecture distribution.

For example, the search policy may be expressed as a search policy (*θ*, y), where *θ* is the ANASOD encoding/hyperparameter recommended by a Bayesian optimization model, and y is a predicted performance indicator of the neural network architecture distribution. A meaning of the search policy may be interpreted as follows: A neural network architecture distribution that is defined by the ANASOD encoding *θ* and whose predicted performance indicator is y is searched for.

A performance prediction model used to predict the performance indicator of the neural network architecture distribution may be a Gaussian process (Gaussian process), a Bayesian neural network (Bayesian neural network), a random forest (random forest), or the like.

The hyperparameter of the new neural network architecture distribution recommended by using the search policy provided in this embodiment of this application is completely different from that used in the method for searching for an ensemble model in the first solution. In the first solution, a NAS method is used to search for a candidate architecture for base learners suitable for forming an ensemble model, and a new neural network architecture cell is directly recommended each time by using the search policy. However, in step 3 provided in this embodiment of this application, an architecture distribution defined by the hyperparameter is selected and evaluated each time. Therefore, a larger part in the search space can be traversed, thereby greatly improving search efficiency.

Step 4: Randomly sample a neural network architecture in the architecture distribution defined by the hyperparameter, and perform performance evaluation, to obtain a performance indicator.

In an implementable implementation, when an architecture distribution (*θ*, *a*, *y*) is optimized/searched for by performing ANASOD, a neural network architecture *a* is searched for and trained in the architecture distribution defined by *θ*, performance of the neural network architecture is evaluated, and a performance indicator *y* of the neural network architecture is used as a common performance indicator of neural network architecture distributions that have the same ANASOD encoding *θ*.

In an implementable implementation, step 4 includes the following steps.

Step 41: Randomly sample a neural network architecture in the distribution defined by the hyperparameter.

In an implementable implementation, in an ANASOD encoding space, a specific quantity of operators in the neural network architecture cell is determined based on an operator distribution probability in the neural network architecture cell defined by the ANASOD encoding *θ*; different operators are randomly connected based on a limitation of the search space, to obtain the neural network architecture cell; and after the neural network architecture cell is determined, the neural network architecture cell is stacked for several times based on a definition of the search space, to obtain the neural network architecture *a*. After it is determined that the operator distribution probability in the neural network architecture *a* satisfies the ANASOD encoding *θ*, the neural network architecture *a* is used as a performance surrogate for all neural network architecture distributions that share the ANASOD encoding *θ*.

Step 42: Train and evaluate the neural network architecture *a* on the dataset, to obtain a performance indicator.

In an implementable implementation, on the training dataset obtained in step 1, the neural network architecture *a* may be trained according to a conventional neural network optimization method based on the sample and the annotation in the classification task; and the validation set is evaluated based on the objective function defined in step 2, and a performance indicator *y* of the validation set is obtained. The process may be expressed as a performance evaluation (*y*, *a*). Training set data and validation set data belong to a same distribution and belong to a same dataset.

In an implementable implementation, performance evaluation of the neural network architecture distribution may be performed based on the performance evaluation (*y*, *a*), and a performance indicator y of the neural network architecture distribution is used as a performance indicator of all architecture distributions that share the hyperparameter *θ*.

Because different neural architecture cells generated by a same architecture distribution have extremely similar final performance, when architecture distribution optimization/search is performed, only one neural network architecture is sampled and evaluated in each architecture distribution, and a performance indicator y of the neural network architecture is used as a performance indicator of all neural network architecture cells that share the ANASOD encoding *θ*, so that high costs caused by repeatedly evaluating performance of similar architecture cells can be effectively avoided.

Step 5: Update the search policy based on the performance indicator *y*, output a current optimal neural network architecture distribution based on a search history while the search policy is updated, and update a performance surrogate model of the neural network architecture. The current optimal neural network architecture distribution is a neural network architecture distribution that meets a requirement.

In an implementable implementation, the search policy for the neural network architecture distribution may be determined based on the performance indicator and the hyperparameter, so that a neural network architecture cell with a higher performance indicator is found in a next iteration. The following steps are included.

Step 51: Update the search policy (*θ*_t, y_t) based on the hyperparameter and the performance indicator, and determine the search policy. t indicates a quantity of iterations.

For example, the search policy is adjusted based on the hyperparameter *θ*_t and the performance indicator y_t of each found neural network architecture distribution, to determine a search policy for a neural network architecture distribution search in the next iteration.

Step 52: Determine a performance prediction policy for the neural network architecture distribution based on the performance indicator and the hyperparameter of the neural network architecture distribution.

In an implementable implementation, the performance prediction policy (*θ*_t, y_t) may be updated based on the hyperparameter *θ* _t and the performance indicator y_t of each found neural network architecture distribution, to determine the performance prediction policy for the neural network architecture distribution.

For example, the hyperparameter *θ*_t and the performance indicator (*θ*_t, y_t) of each found neural network architecture distribution are input into a performance prediction model, and predicted performance values of hyperparameters of other unknown distributions may be output, including a mean (mean) m value and a variance (variance) v value.

t^{th} predicted performance value (m, v)=performance prediction model (*θ*|{*θ*_i, y_i}^t_{i=1, 2, ..., t}).

*θ* indicates an unknown hyperparameter value, and { } indicates historical hyperparameters that have been searched for and evaluated.

Step 53: Update the performance prediction policy based on the predicted performance value, to determine a next evaluation object (*θ*₋(t+1), y_t+1).

Step 54: Output the current optimal neural network architecture distribution based on the search history.

In an implementable implementation, a neural network architecture distribution that meets a requirement is determined based on a plurality of neural network architecture distributions in a historical search and corresponding performance indicators.

For example, in the historical search, there are hyperparameters and performance (*θ*_1, y_1), (*θ*_2, y_2), and (*θ*_3, y_3) of three architecture distributions, where a performance indicator y_2 of (*θ*_2, y_2) is optimal, and architecture distributions that share the hyperparameter *θ*_2 are neural network architecture distributions that meet the requirement.

Step 55: Generate a plurality of neural network architecture cells based on the neural network architecture distribution that meets the requirement, to obtain a generation distribution/the candidate pool of the base learners.

In an implementable implementation, many specific neural network architectures may be randomly generated based on the optimal neural network architecture distribution output in S54, to obtain the generation distribution/candidate pool of base learners. The optimal neural network architecture distribution is a neural network architecture distribution that meets the requirement.

Step 56: Determine a surrogate model, where the surrogate model is used to predict test performance of an unevaluated neural network architecture, to help predict and assist in searching for an optimal vertex architecture, so as to fast generate a high-quality ensemble model.

In an implementable implementation, the surrogate model may be trained and updated based on neural network architecture cells and performance indicators that are evaluated in t search processes.

In an implementable implementation, the surrogate model may be a Gaussian process with a Weisfeiler-Lehman graph kernel (Gaussian process with WL graph kernel, GPWL). For example, y=GPWL model (al{a_i, y_i}^t_{i=1, 2, ..., t}), where a is an unknown neural network architecture, y is architecture performance predicted by the surrogate model, and { } indicates a historical neural network architecture that has been searched for and evaluated.

Based on a distributional neural network architecture search (distributional NAS) operation and experimental validation, a high-quality architecture distribution can be often used to generate high-quality neural network architectures with similar performance. Therefore, for an ensemble model search, a good architecture distribution naturally provides a good candidate pool of base learners. Compared with the conventional technology in which conventional NAS is performed to iteratively evaluate a single neural network architecture and then add the single neural network architecture to a candidate pool, the distributional neural network architecture search method provided in this embodiment of this application is used to learn the candidate pool/architecture distribution. This is more efficient, and greatly reduces a quantity of times and costs of evaluating a single network architecture.

An effect of the ensemble model depends not only on the performance of the base learner, but also on diversity of the base learners in a combination. Therefore, if *k* base learners with optimal performance are combined, an optimal ensemble model may not be generated. Selecting an optimal combination of a size of *k* from the candidate pool is a very complex permutation and combination problem.

In the ensemble model search in the first solution, the base learners in the combination are mainly selected one by one by using a greedy algorithm, but this method requires that a quantity of ensemble models to be evaluated and a size of the candidate pool is in direct proportion to a size of a final ensemble model.

According to a previous research on the ensemble model and further experimental analysis, it can be found that on the premise of ensuring average performance of the base learners, a larger prediction difference between the learners that form the ensemble model indicates better performance of the ensemble model. A prediction difference between vertex architectures in the search space is usually large. Therefore, a combination of k best vertex architectures can naturally ensure the diversity of the ensemble model, to generate an excellent architecture ensemble. To find a true vertex architecture, all neural network architectures in the search space need to be traversed and evaluated.

According to the method for searching for a neural network ensemble model in this embodiment of this application, the following step 6 is performed to perform architecture sampling and architecture ensemble search, and a high-quality ensemble model can be found only by evaluating a combination of base learners for very few times (even once). The following describes step 6 in detail.

Step 6: Predict test performance of the base learner in the candidate pool by using the surrogate model, and determine that *k* base learners that meet a scenario requirement of the classification task form an ensemble model, where a size of the ensemble model is *k*.

*k* most suitable base learners need to be found from the generation distribution/candidate pool of base learners to form the ensemble model, and the size of the ensemble model is *k*.

In an implementable implementation, in step 6, the ensemble model is obtained through the following steps S61 to S63.

Step 61: Directly predict performance of another unevaluated architecture by using the surrogate model determined in step 5, to avoid huge evaluation costs.

In an implementable implementation, random sampling may be first performed in an optimal architecture distribution, and then local search (local search) is performed based on a predicted performance indicator in a plurality of sampled architectures.

Step 62: Determine q estimated vertex architectures based on the predicted performance indicator output by the surrogate model, where the estimated vertex architecture is a neural network architecture whose performance indicator predicted by the surrogate model on the validation set is higher than that of an adjacent architecture.

The adjacent architecture is a network architecture in which operator arrangements differ by only one position. For example, there are the following three neural network architectures: an architecture 1: A-A-B-C, an architecture 2: A-B-B-C, and an architecture 3: A-A-C-C. The architecture 1 and the architecture 2 are adjacent architectures, and the architecture 1 and the architecture 3 are adjacent architectures.

Step 63: Combine k estimated vertex architectures with best performance indicators in the q estimated vertex architectures, to obtain the ensemble model.

In an implementable implementation, performance indicators of the q estimated vertex architectures may be sorted in descending order, and k architectures whose performance indicators rank top are combined, to obtain the ensemble model. In an implementable implementation, the k estimated vertex architectures whose performance indicators meet a classification task requirement in the q estimated vertex architectures may be combined, to obtain the ensemble model. The requirement of the classification task may be highest accuracy, a lowest error rate, a minimum loss function, or the like.

In an implementable implementation, the greedy algorithm may be used to find, from the q estimated vertex architectures one by one, k estimated vertex architectures that can maximize performance improvement of the existing ensemble model, and combine the k estimated vertex architectures, to obtain a final ensemble model.

Finally, step S7 is performed to output the ensemble model.

In an implementable implementation, a maximum quantity of searches or maximum search time may be defined as a termination criterion. If the termination criterion is not met, the iteration of step 3 to step 6 continues to be performed. After the termination criterion is met, the algorithm iteration in this embodiment of this application is terminated. The output ensemble model may be directly applied to the scenarios mentioned above in a downstream direction.

### Embodiment 1

A method for searching for a neural network ensemble model provided in an embodiment of this application is applied to an image classification task, to search for a high-performance neural network ensemble model in common search spaces such as DARTS and NAS-Bench-201 and datasets such as CIFAR10, CIFAR100, and ImageNet16-120, and set that training set data and validation set data belong to a same distribution. The following describes in detail specific steps of the method for searching for a neural network ensemble model provided in this application in the image classification task scenario in Embodiment 1.

S701: Obtain data.

For example, the data may be obtained from a common image classification dataset. For example, CIFAR-10 and CIFAR-100 training sets/validation sets each have 50,000/10,000 images, while an ImageNet16-120 training/validation set has more than 154,700/3,000 images. Training set data and validation set data may be obtained from these datasets.

In an implementable implementation, a neural network architecture may be searched for by using the images in the training set and manually annotated labels of the images, and validated based on the validation set.

S702: Define a search space and an objective function.

In an implementable implementation, the search space may be defined as a NAS-Bench-201 search space, where there are six operator positions *N* = 6 and five operator type options *k* = 5, and the five operator types are a 3x3 convolution, 3x3 flat pooling, a 1x1 convolution, a residual connection, and a zero connection. The search space includes a total of 15,625 neural network architecture cells. After isomorphic (isomorphic) architecture cells are removed, there are a total of 6466 different (unique) neural network architecture cells. In this search space, the objective function in this application is to output a classification error rate of an ensemble model on the CIFAR-10 validation set.

In the NAS-Bench-201 search space, an ensemble model that expects to be found is an ensemble model with a low classification error rate on the validation set.

In an implementable implementation, the search space may be defined as a DARTS-based search space, where there are eight operator positions *N* = 8 and seven type options *k* = 7, and specific operator types are: a 3x3 or 5x5 separable convolution (separable convolution), a 3x3 or 5x5 dilated convolution (dilated convolution), 3x3 maximum pooling (max pooling), 3x3 average pooling (average pooling), and a residual connection (skip connection). In this search space, the objective function in this application is also to output a classification error rate of an ensemble model on the CIFAR-10 validation set.

In the following, a neural network ensemble model is searched for based on an ANASOD and a Gaussian process. Specific steps are described in detail below:
The objective function and an ensemble model size of k are used as an input, a hyperparameter of an architecture distribution search ANASOD and a hyperparameter of an initial architecture distribution are initialized. The hyperparameter is also referred to as an ANASOD encoding. The following steps are iterated before a termination criterion is met:

S703: Recommend a hyperparameter of an architecture distribution, that is, the ANASOD encoding, according to a search policy.

S704: Randomly sample a specific neural network architecture from an operator distribution defined by the ANASOD encoding, perform performance evaluation, and use an evaluation result as a performance surrogate for all neural network architectures that share the ANASOD encoding.

S705: Update the distribution search policy and a surrogate model by using the evaluation result of the neural architecture in S704, where the surrogate model is a Gaussian process with a Weisfeiler-Lehman graph kernel (Gaussian process with WL graph kernel, GPWL).

S706: Obtain q samples from the current optimal architecture distribution/ANASOD encoding recommended according to the search policy, use the surrogate model to evaluate test performance of each sample, then starting from each sample, perform local search to find an estimated vertex architecture near the sample, and select k architectures with optimal prediction performance from q estimated vertex architectures to form an ensemble model.

The ensemble model is output.

In Embodiment 1 provided in this application, a method for searching for a neural network architecture distribution based on an ANASOD is used in a first phase of an architecture ensemble search, as shown in steps S703 to S705. In a second phase, the Gaussian process with a Weisfeiler-Lehman graph kernel (Gaussian process with WL graph kernel, GPWL) is used as the surrogate model, as shown in an updated surrogate model in step S705, to assist in vertex model prediction and a final ensemble search, as shown in step S706.

In the NAS-Bench-201 search space, the method for searching for a neural network ensemble model provided in this embodiment of this application is compared with existing architecture ensemble search benchmarks NES-RS and NES-RE. Table 1 shows comparison data between the method (denoted as DistriNAS-PM) for searching for a neural network ensemble model provided in this embodiment of this application and another method in the NAS-Bench-201 search space. A result is an average validation set error rate (%) (±one standard error) in 10 tests. In Table 1, the method for searching for a neural network ensemble model provided in this embodiment of this application is denoted as DistriNAS-PM. Other methods include NES-RS, NES-RE, and Deep Ensemble, and quantities of evaluations, test errors, and confidence levels of the CIFAR10, CIFAR100, and ImageNet16-120 datasets are compared separately.

It can be learned from Table 1 that, a quantity N of network architectures evaluated by using the DistriNAS-PM method provided in this embodiment of this application is 30. Compared with NES-RS and NES-RE, the DistriNAS-PM method provided in this embodiment of this application can be used to find an ensemble model with a similar or even lower test error (Error) only by using less than 1/3 of search costs. In addition, the architecture ensemble found in this embodiment of this application not only has a low test error, but also has a model calibration degree and a confidence level that are equivalent to those of an optimal ensemble model found by using NES-RE. The confidence level is calculated by a negative log-likelihood (negative log likelihood, NLL). A lower NLL indicates a higher model calibration degree.

**Table 1**

| Search method | Search costs (quantity N of network architecture evaluations) | Dataset | | | | | |
|---|---|---|---|---|---|---|---|
| | | CIFAR10 | | CIFAR100 | | ImageNet16-120 | |
| | | Error | NLL | Error | NLL | Error | NLL |
| NES-RS | 100 | 5.20 ±0.29 | 0.210 ±0.006 | 25.40 ±0.48 | 1.10 ±0.010 | 50.93 ±0.52 | 2.00 ±0.025 |
| NES-RE | 100 | 4.80 ±0.11 | 0.206 ±0.004 | 23.88 +0.71 | 1.05 ±0.011 | 49.78 ±0.63 | 1.93 ±0.014 |
| DistriNAS-PM | 30 | 4.90 ±0.24 | 0.208 ±0.012 | 23.78 ±1.10 | 1.05 ±0.032 | 49.56 ±0.60 | 1.93 ±0.022 |
| Deep ensemble | - | 5.43 ±0.11 | 0.238 ±0.019 | 25.21 ±0.84 | 1.11 ±0.042 | 50.96 ±0.066 | 1.98 ±0.030 |

In addition, a deep ensemble (deep ensemble) benchmark is added to the last row of Table 1: Base learners in the architecture ensemble found in this embodiment of this application are trained by using k different initial training weights, to evaluate deep ensemble effects corresponding to the base learners. The results of Table 1 again prove that an ensemble model formed by using different architectures (architectures) is better than an ensemble model formed by using different initial training weights (initialization).

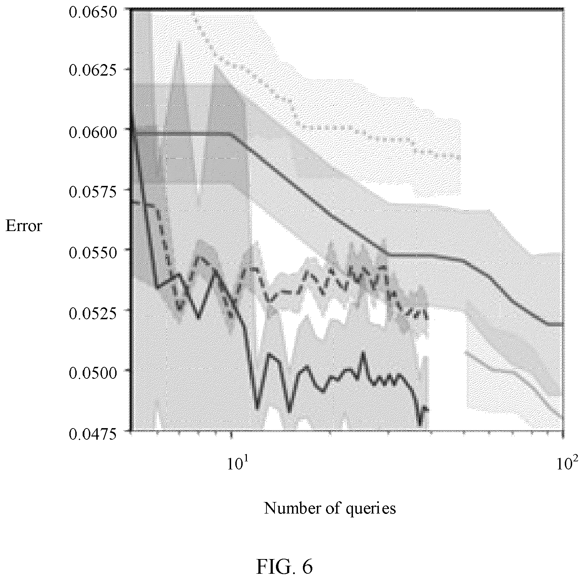

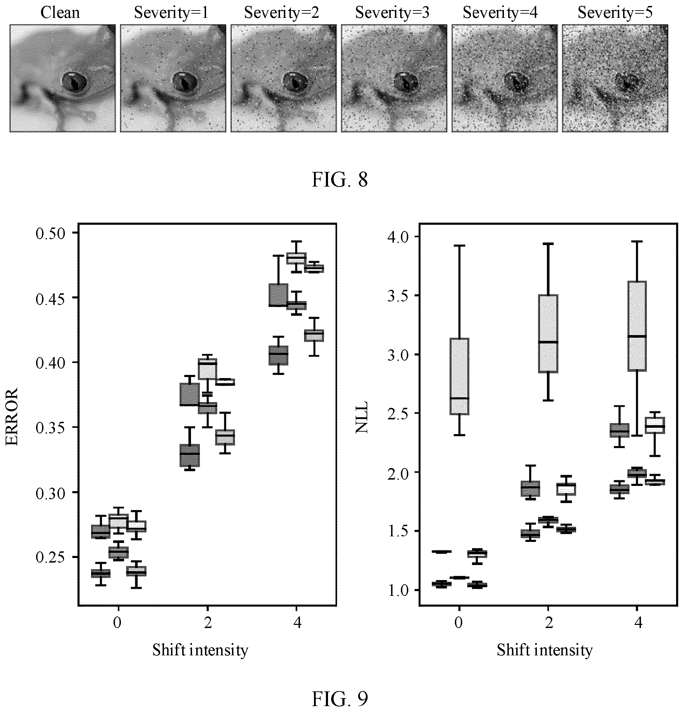

FIG. 6 is a diagram of comparison curves of test errors obtained on CIFAR10 by using various benchmarks including DistriNAS-PM according to this application. As shown in FIG. 6, the test errors obtained by using the benchmarks on CIFAR10 are compared as the search progresses and a quantity of architecture evaluations gradually increases, including ensemble models found by using different methods such as DistriNAS-PM, NES-RS, and NES-RE in the NAS-Bench-201 search space, a deep ensemble model (Deep Ensemble) corresponding to each architecture in the architecture ensemble found by using DistriNAS in this application, and an optimal base learner. A lower validation set error rate (%) indicates a better CIFAR-10 dataset. An x-axis in FIG. 8 is the quantity of architecture evaluations.

It can be learned from FIG. 6 that the architecture ensemble search method (distriNAS-pm) provided in this embodiment of this application can be used to find an architecture ensemble with a lower validation error faster than NES-RS and NES-RE, to greatly reduce search costs. A lower error is obtained for validation of the architecture ensemble than for the deep ensemble. All ensemble models are definitely better than an optimal single neural network architecture/base learner.

To validate an effect of the search method in this embodiment of this application in a larger and more real search space, comparison may be further performed with NES-RS with different search costs in the DARTS search space. Table 2 shows comparison data of the method (DistriNAS-PM) provided in this embodiment of this application and NES-RS with different search costs in a CIFAR10 task in the DARTS search space. A result is an average validation set error rate (%) in three tests.

**Table 2**

| Search method | Search costs (quantity N of network architecture evaluations) | Dataset | |
|---|---|---|---|
| | | DARTS-CIFAR10 | |
| | | Error | NLL |
| NES-RS | 50 | 0.052 | 0.178 |
| | 200 | 0.051 | 0.180 |
| | 400 | 0.050 | 0.179 |
| DistriNAS-PM | 50 | 0.047 | 0.165 |

The results of Table 2 show that, in the DARTS search space, the architecture ensemble search method provided in this embodiment of this application can be used to find a better architecture ensemble than that found by using the existing benchmark NES-RS with only 1/8 of search costs.

In an application scenario of this embodiment, the procedure in this embodiment of this application is compared with an existing method. In this embodiment of this application, a neural network ensemble model with similar performance can be found with lower calculation costs within shorter time, so that search efficiency of the ensemble model is improved, and architecture ensemble search precision is improved.

Compared with the existing method, in this embodiment of this application, a neural network architecture ensemble with higher precision can be found with same costs within same time. During actual production, based on this embodiment of this application, a convolutional neural network architecture ensemble with higher precision can be found with lower calculation costs within shorter time, to be applied to an image classification task. This beneficial effect is achieved mainly because in this embodiment of this application, distributional architecture search is performed to search for the candidate pool of the base learners (the first phase), and a combination of the surrogate model and the vertex architecture is used to search for a high-quality ensemble model (the second phase). In this way, requirements for performing a large amount of training and a large quantity of evaluations on a single neural network architecture (a single base learner) are greatly lowered.

### Embodiment 2

In Embodiment 2, robustness of OOD data in this embodiment of this application is validated during image classification application. OOD data is common in many types of practical application, such as autonomous driving and medical imaging diagnostics. In this embodiment of this application, a high-performance neural network ensemble model is searched for in common search spaces and datasets. The common search spaces include DARTS and NAS-Bench-201, and the datasets include CIFAR10 and CIFAR100. Validation samples that are disturbed by a plurality of types of noise to different degrees are used to evaluate test errors, calibration degrees, and rejection capabilities of architecture ensembles found by using different methods on OOD data. The validation samples that are disturbed by the plurality types of noise include CIFAR10-C and CIFAR100-C.

CIFAR10-C and CIFAR100-C are generated by randomly adding one of 15 types of disturbance/noise to images in CIFAR10 and CIFAR100 validation sets, respectively. There are five levels of disturbance/noise intensity (shift severity) in ascending order. A higher intensity level indicates a larger shift of an image generation distribution, that is, a larger distribution difference between an interfered image and an original image.

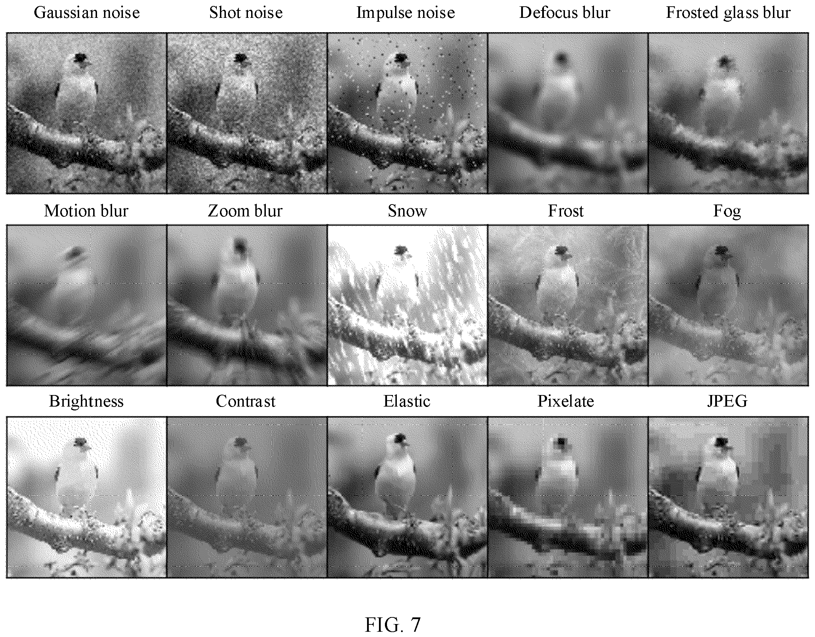

FIG. 7 is a schematic diagram of 15 types of interference/noise that are randomly selected and added to images in CIFAR10 and CIFAR100 validation sets.

FIG. 8 is a diagram of an effect that is after interference/noise is randomly selected and added to images in CIFAR10 and CIFAR100 validation sets. FIG. 8 shows that a higher level of interference/noise indicates a larger (distribution) difference between a generated interfered image and an original image.

First, in a NAS-Bench-201 search space, a DistriNAS-PM method provided in this embodiment of this application is compared with existing architecture ensemble search methods NES-RS and NES-RE in an OOD task of CIFAR100-C. A comparison result is the same as that of the scenario in Embodiment 1: Architecture ensembles of NES-RS and NES-RE are found after 100 neural network architectures are evaluated, but only 30 neural network architectures need to be evaluated in DistriNAS-PM provided in this embodiment of this application.

FIG. 9 is a schematic diagram of OOD validation comparison between DistriNAS-PM and another search method in a NAS-Bench-201 space according to this application. FIG. 9 shows that in the NAS-Bench-201 space, compared with NES-RS and NES-RE, in this embodiment of this application, DistriNAS-PM can be used to find an architecture ensemble with a lower error and better model calibration (a lower NLL) on an OOD validation set with less than 1/3 of costs.

As shown in FIG. 9, the architecture ensemble found by using DistriNAS-PM has a test error that is better than that found by using NES-RS and that is equivalent to that found by using NES-RE on an original image (severity=0). When data is interfered at different degrees (severity=2 and 4) to cause OOD, the architecture ensemble found by using DistriNAS-PM is slightly better than architecture ensembles found by using NES-RS and NES-RE in terms of a test error and a model calibration degree (an NLL). It is proved that the search method provided in this embodiment of this application can be used to faster find a good ensemble and can be used to find an ensemble that is more robust to OOD data.

It should be noted that, FIG. 9 also shows performance (bright color modules) of optimal base learners in respective architecture ensembles found by using different methods. It can be found that test errors and NLLs achieved by all ensemble models on OOD data are definitely lower than those achieved by an optimal single neural network architecture/base learner. This proves that the ensemble model mentioned in this application has a better rejection capability and robustness when data is interfered or when a test data distribution is inconsistent with a training data distribution.

Search is also performed in a larger DARTS search space and validation is performed on a CIFAR10-C dataset. Table 3 shows comparison data of the method (DistriNAS-PM) provided in this embodiment of this application and NES-RS with different search costs in a CIFAR10-C task in the DARTS search space. A result is an average validation set error rate (%) in three tests, as shown in Table 3.

The results of Table 3 show that in the DARTS space, the method provided in this embodiment of this application can also be used to efficiently find an architecture ensemble with a smaller test error of OOD data, better model uncertainty calibration (a lower NLL), and better robustness.

**Table 3**

| Search method | Search costs (quantity N of network architecture evaluations) | Interference level | | Interference level | | Interference level | |
|---|---|---|---|---|---|---|---|
| | | 1 | | 3 | | 5 | |
| | | Error | NLL | Error | NLL | Error | NLL |
| NES-RS | 50 | 0.090 | 0.288 | 0.123 | 0.382 | 0.179 | 0.549 |
| | 200 | 0.089 | 0.291 | 0.124 | 0.390 | 0.179 | 0.553 |
| | 400 | 0.088 | 0.289 | 0.122 | 0.386 | 0.176 | 0.550 |
| DistriNAS-PM | 50 | 0.085 | 0.278 | 0.117 | 0.380 | 0.158 | 0.495 |

In an application scenario of Embodiment 2, compared with the existing method, in the method for searching for a neural network ensemble model provided in this embodiment of this application, a neural network ensemble model with similar performance can be found with lower calculation costs within shorter time, so that search efficiency of the ensemble model is improved, robustness of architecture ensemble search is improved for OOD data, and a lower validation error, higher model calibration, and a more accurate uncertainty value are achieved. During actual production, based on this embodiment of this application, a high-quality architecture ensemble applicable to a high-risk or high-uncertainty use scenario can be found with a lower calculation amount within shorter time.

According to the method for efficiently searching for a multi-neural network ensemble model provided in this embodiment of this application, based on a two-phase search framework that is efficient and more suitable for an ensemble model search, distributional neural architecture search rather than conventional NAS is performed to fast find a candidate pool of base learners, to avoid repeated evaluations of a similar network architecture to improve search efficiency; and a surrogate model is used to fast select an optimal and diversified vertex model from the candidate pool based on predicted (not actual) performance to form an objective set model.

Compared with the existing method, the method in this embodiment of this application can be used to search for an ensemble model more efficiently, to greatly reduce search costs, and greatly enhance feasibility of searching for an ensemble model in more application scenarios. The original method relies on the conventional NAS, and needs to be used to search for and evaluate base learners one by one to build a large enough candidate pool. However, in this method, distributional architecture search is performed to fast build a candidate pool of base learners, so that a search space is simplified and search difficulty is reduced.

When the optimal ensemble model is built by searching the candidate pool of the base learners, in this embodiment of this application, the surrogate model is used to search the candidate pool for a vertex model, to ensure diversity of vertex models while ensuring efficiency, and ensure that performance of a set model can be greatly improved compared with a single base learner.

Embodiments of this application may be combined with various types of distributional architecture searches, and are applicable to different search spaces. Embodiments of this application are highly universal and may be applied to different scenarios and tasks.

In addition to a convolutional neural network architecture search, embodiments of this application may also be potentially applied to another type of neural architecture search task that has a similar architecture search cell structure, and another task that can bring further benefits by using an ensemble model, for example, a recurrent neural network (recurrent neural network, RNN) architecture commonly used for natural language processing and a deep transformer self-attention network (deep transformer self-attention network) commonly used for natural language processing and visual tasks, to obtain a good measurement of an uncertainty.

An embodiment of this application provides an apparatus for searching for a neural network architecture ensemble model. The apparatus includes: a data obtaining module, configured to obtain a dataset, where the dataset includes a sample and an annotation in a classification task; an architecture distribution search module, configured to perform search by using a distributional neural network architecture search algorithm, including: determining a hyperparameter of a neural network architecture distribution; sampling a neural network architecture from the architecture distribution defined by the hyperparameter; training and evaluating the neural network architecture based on the sample and the annotation in the classification task, to obtain a performance indicator; determining, based on the performance indicator, neural network architecture distributions that share the hyperparameter, to obtain a candidate pool of base learners, where the base learner is a neural network architecture that meets an architecture distribution requirement, and the neural network architecture is formed by repeatedly stacking neural network architecture cells; and determining a surrogate model, where the surrogate model is used to predict test performance of an unevaluated neural network architecture; and an architecture ensemble model combination module, configured to predict test performance of the base learner in the candidate pool by using the surrogate model, and determine that *k* base learners that meet a requirement of the classification task form an ensemble model, where a size of the ensemble model is *k*.

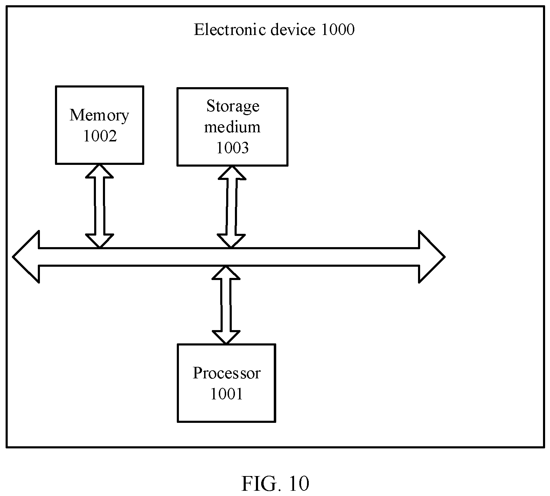

An embodiment of this application provides an electronic apparatus 1000. As shown in FIG. 10, the electronic apparatus 1000 includes a processor 1001 and a memory 1002. The processor 1001 is configured to execute computer executable instructions stored in the memory 1002, and the processor 1001 runs the computer executable instructions to perform the method for searching for a neural network structure based on evolutionary learning in any one of the foregoing embodiments.

An embodiment of this application provides a storage medium, including a readable storage medium and a computer program stored in the readable storage medium. The computer program is configured to implement the method for searching for a neural network structure based on evolutionary learning in any one of the foregoing embodiments.

A person of ordinary skill in the art may be aware that, in combination with the examples described in embodiments disclosed in this specification, units and algorithm steps may be implemented by electronic hardware or a combination of computer software and electronic hardware. Whether the functions are performed by using hardware or software depends on particular applications and design constraint conditions of the technical solutions. A person skilled in the art may use different methods to implement the described functions for each particular application, but it should not be considered that the implementation goes beyond the scope of embodiments of this application.

In addition, aspects or features in embodiments of this application may be implemented as a method, an apparatus, or a product that uses standard programming and/or engineering technologies. The term "product" used in this application covers a computer program that can be accessed from any computer-readable component, carrier, or medium. For example, a computer-readable medium may include but is not limited to: a magnetic storage component (for example, a hard disk, a floppy disk, or a magnetic tape), an optical disc (for example, a compact disc (compact disc, CD) or a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may indicate one or more devices and/or other machine-readable media that are configured to store information. The term "machine-readable media" may include but is not limited to a radio channel, and various other media that can store, include, and/or carry instructions and/or data.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located at one position, or may be distributed on a plurality of network units. Some or all of the units may be selected based on actual requirements to achieve the objectives of the solutions of embodiments.

When the functions are implemented in a form of a software functional unit and sold or used as an independent product, the functions may be stored in a computer-readable storage medium. Based on such an understanding, the technical solutions of embodiments of this application essentially, or the part contributing to the conventional technology, or some of the technical solutions may be implemented in a form of a software product. The computer software product is stored in a storage medium, and includes several instructions for instructing a computer device (which may be a personal computer, a server, an access network device, or the like) to perform all or some of the steps of the methods described in embodiments of this application. The foregoing storage medium includes any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for searching for a neural network architecture ensemble model, wherein the method comprises:
obtaining a dataset, wherein the dataset comprises a sample and an annotation in a classification task;
performing search by using a distributional neural network architecture search algorithm, comprising:
determining a hyperparameter of a neural network architecture distribution; sampling a neural network architecture from the architecture distribution defined by the hyperparameter; training and evaluating the neural network architecture based on the sample and the annotation in the classification task, to obtain a performance indicator;
determining, based on the performance indicator, predicted neural network architecture distributions that share the hyperparameter, to obtain a candidate pool of base learners, wherein the base learner is a neural network architecture that meets an architecture distribution requirement, and the neural network architecture is formed by repeatedly stacking neural network architecture cells; and determining a surrogate model, wherein the surrogate model is used to predict test performance of an unevaluated neural network architecture; and
predicting test performance of the base learner in the candidate pool by using the surrogate model, and determining that *k* base learners that meet a requirement of the classification task form an ensemble model, wherein a size of the ensemble model is *k*.

2. The method for searching for a neural network architecture ensemble model according to claim 1, wherein the performing search by using a distributional neural network architecture search algorithm comprises:
performing distributional neural network architecture search by using an approximate neural network architecture search via operation distribution (approximate neural architecture search via operation distribution, ANASOD) algorithm.

3. The method for searching for a neural network architecture ensemble model according to claim 1 or 2, wherein the determining a hyperparameter of a neural network architecture distribution comprises:
determining that the hyperparameter of the neural network architecture distribution is an ANASOD encoding, wherein the ANASOD encoding is a vector indicating probability distributions of operators in the neural network architecture cell, and there is a one-to-many mapping between an ANASOD encoding and a neural network architecture cell.

4. The method for searching for a neural network architecture ensemble model according to claim 1 or 2, wherein the determining a hyperparameter of a neural network architecture distribution comprises:
optimizing the hyperparameter of the neural network architecture distribution by using a search policy, wherein the search policy is Bayesian optimization, and the search policy is used to sample, in a next iteration, a neural network cell whose performance indicator better meets a requirement than that of a current neural network architecture cell.

5. The method for searching for a neural network architecture ensemble model according to claim 3, wherein the sampling a neural network architecture from the architecture distribution defined by the hyperparameter comprises:
determining a specific quantity of operators in constituent cells of the neural network architecture based on an operator probability distribution defined by the ANASOD encoding; and
connecting different operators based on a specified search space to obtain the valid neural network architecture.

6. The method for searching for a neural network architecture ensemble model according to claim 1 or 2, wherein the training and evaluating the neural network architecture cell on the dataset, to obtain a performance indicator comprises:
training the neural network architecture on a training dataset; and
evaluating the neural network architecture on a validation dataset, to obtain the performance indicator, wherein both training set data and validation set data belong to the dataset.

7. The method for searching for a neural network architecture ensemble model according to claim 1 or 2, wherein the performing search by using a distributional neural network architecture search (distributional NAS) algorithm further comprises:
determining the search policy for the neural network architecture distribution based on the performance indicator and the hyperparameter of the predicted neural network architecture distribution.

8. The method for searching for a neural network architecture ensemble model according to claim 1 or 2, wherein the performing search by using a distributional neural network architecture search (distributional NAS) algorithm further comprises:
determining a predicted performance value of a hyperparameter of another unknown distribution, comprising a mean value and a variance, based on a hyperparameter and a performance indicator of each found neural network architecture distribution; and
determining a performance prediction policy for the neural network architecture distribution based on the mean value and the variance, wherein the performance prediction policy is used to predict the performance indicator of the neural network architecture distribution.

9. The method for searching for a neural network architecture ensemble model according to claim 1 or 2, wherein the determining, based on the performance indicator, neural network architecture distributions that share the hyperparameter, to obtain a candidate pool of base learners comprises:
determining a search policy for the neural network architecture distribution based on the performance indicator and the hyperparameter;
determining a performance prediction policy for the neural network architecture distribution based on the performance indicator and the neural network architecture cell; and
searching, according to the search policy and the performance prediction policy, the neural network architecture distributions that share the hyperparameter, to determine the candidate pool of the base learners.

10. The method for searching for a neural network architecture ensemble model according to claim 1 or 2, wherein the determining, based on the performance indicator, neural network architecture distributions that share the hyperparameter, to obtain a candidate pool of base learners comprises:
outputting, based on a plurality of neural network architectures in a historical search and corresponding performance indicators, a plurality of neural network architectures that share the hyperparameter;
determining, based on the plurality of neural network architectures that share the hyperparameter, a neural network architecture distribution that meets a requirement; and
generating a plurality of neural network architecture cells based on the neural network architecture distribution that meets the requirement, to obtain a generation distribution/the candidate pool of the base learners.

11. The method for searching for a neural network architecture ensemble model according to claim 1 or 2, wherein the determining a surrogate model comprises:
obtaining the surrogate model through training on the dataset based on the neural network architecture cells and the performance indicator.

12. The method for searching for a neural network architecture ensemble model according to claim 1 or 2, wherein the predicting test performance of the base learner in the candidate pool by using the surrogate model, and determining that *k* base learners that meet a task scenario requirement form an ensemble model comprises:
predicting test performance of a plurality of base learners in the candidate pool by using the surrogate model;
performing local search (local search) based on a prediction result, and determining q estimated vertex architectures, wherein the estimated vertex architecture is a neural network architecture whose performance indicator predicted by the surrogate model on a validation set is higher than that of an adjacent architecture; and
combining k architectures whose performance indicators meet the requirement in the q estimated vertex architectures, to obtain the ensemble model.

13. The method for searching for a neural network architecture ensemble model according to claim 12, wherein the combining k architectures whose performance indicators meet the requirement in the q estimated vertex architectures comprises:
sorting performance indicators of the q estimated vertex architectures in descending order, and combining k architectures whose performance indicators rank top.

14. The method for searching for a neural network architecture ensemble model according to claim 12, wherein the combining k architectures whose performance indicators meet the requirement in the q estimated vertex architectures comprises:
traversing the q estimated vertex architectures by using a greedy algorithm (greedy selection algorithm), and adding the k architectures one by one to form the ensemble model.

15. An apparatus for searching for a neural network architecture ensemble model, wherein the apparatus comprises:
a data obtaining module, configured to obtain a dataset, wherein the dataset comprises a sample and an annotation in a classification task;
an architecture distribution search module, configured to perform search by using a distributional neural network architecture search algorithm, comprising: determining a hyperparameter of a neural network architecture distribution; sampling a neural network architecture from the architecture distribution defined by the hyperparameter; training and evaluating the neural network architecture based on the sample and the annotation in the classification task, to obtain a performance indicator; determining, based on the performance indicator, neural network architecture distributions that share the hyperparameter, to obtain a candidate pool of base learners, wherein the base learner is a neural network architecture that meets an architecture distribution requirement, and the neural network architecture is formed by repeatedly stacking neural network architecture cells; and determining a surrogate model, wherein the surrogate model is used to predict test performance of an unevaluated neural network architecture; and
an architecture ensemble model combination module, configured to predict test performance of the base learner in the candidate pool by using the surrogate model, and determine that *k* base learners that meet a requirement of the classification task form an ensemble model, wherein a size of the ensemble model is *k*.

16. An electronic apparatus, comprising a processor and a memory, wherein the processor is configured to execute computer executable instructions stored in the memory, and the processor runs the computer executable instructions to perform the method for searching for a neural network structure based on evolutionary learning according to claims 1 to 14.

17. A storage medium, comprising a readable storage medium and a computer program stored in the readable storage medium, wherein the computer program is configured to implement the method for searching for a neural network structure based on evolutionary learning according to claims 1 to 14.
